# EUROPEAN PATENT SPECIFICATION

(11) **EP 0 306 063 B1**
(45) Date of publication and mention of the grant of the patent: **10.08.1994**
(21) Application number: 88201170.3
(22) Date of filing: 07.06.1988
(51) Int. Cl.: G06F 3/02, G06F 15/02

(54) **Portable computer with large screen display**
Tragbarer Computer mit grosser Bildschirmdarstellung
Calculateur portable avec un grand écran d'affichage

(30) Priority: 02.09.1987 US 92372
(43) Date of publication of application: 08.03.1989
(73) Proprietor: The Laitram Corporation, Harahan Louisiana 70123 (US)
(72) Inventor: Lapeyre, James Martial, Harahan Louisiana 70123 (US)
(74) Representative: Petri, Stellan

(56) References cited:
- EP-A- 0 126 542
- GB-A- 2 133 745
- US-A- 4 396 941
- US-A- 4 547 860
- HEWLETT-PACKARD JOURNALVOL. 38, NO. 8, AUGUST 1987, PAGES 11-17, PALO ALTO, CALIFORNIA, USA; W. C. WICKES: "AN EVOLUTIONARY RPN CALCULATOR FOR TECHNICAL PROFESSIONALS"

## Description

### Technical Field

This invention relates to programmable portable pocket-sized electronic computers, and more particularly it relates to keyboard operated computers with large screen displays capable of graphical presentations and useful in the word processing mode of computer application.

### Background Art

In GB-A-2 133 745 a pocket sized computer according to the preamble of claim 1 is disclosed, having however a one line display with limited text processing capabilities.

In U.S. -A-4,547,860 a comprehensive pocket-sized computer system is provided which can process alphanumeric information as well as many different computer commands from a self-contained keyboard having only twelve to sixteen keys. Therein different modes of operation of the keys in the keyboard provide, typically, a single stroke per entry mode for a decimal calculating mode and atwo keystroke per entry alphameric data processing mode which also incorporates a significant number of computer commands accessible from the keyboard. This is a significant departure from the portable electronic computer art in general, where pocket sized general purpose computing capabilities and alphanumeric operations use a large number of keys, often exceeding forty. Thus, typewriter style keyboards are the most common, and the trend is to add more keys for more functions. Even in arithmetic only calculators, as many as forty-five keys are provided in pupular commercial models to perform a limited number of the many command functions now available with modern computer chips used in pocket sized comupters.

A typical prior art example of a numeric only mode is the Casio fx-7000G programmable scientific calculator, having a front panel sharing a screen for graphic displays with a keyboard requiring forty-five keys to enter respectively decimal digits and calculating functions. This display screen is limited by the keyboard structure to less than one-third of the front panel surface area. Thus the graph size and detail is limited by the keyboard requirements. This calculator does have the capability to annotate the graph with numerical data, but is significantly limited in its ability to produce alphabet characters. It is incapable of general purpose alphanumeric data processing in such applications as written communications and word processing.

It is an objective of this invention to improve the status of this art by providing programmable portable pocket-sized electronic computers capable of full alphanumeric communication and word processing operations and having enlarged screen area having graphic and alphanumeric capacity together with ample room for manual fingertip entry of alphanumeric data and command signals as disclosed in Claim 1.

### Disclosure of the Invention

A programmable portable electronic computer housing has a front panel sharing a keyboard and display panel with the keyboard section taking up no more than half the area of the front panel, thereby providing a large screen display for graphical configuration and multiple line alphanumeric display for purposes such as communications and word processing. In order to provide a large enough display area in a pocket sized portable computer for annotated graphs and word processing displays, the keyboard is limited to twelve or sixteen keys. These keys are spaced far enough apart for manual finger-tip use in a typing mode without interference between adjacent key entry positions, yet they provide for entry of both arithmetic and alpha data as well as a large inventory of computer and data processing commands.

The decreased number of keys permitting manual entry without crowding the finger space available is achieved in part by the data entry configuration of the above mentioned patent. Thus entry of alpha data and computer commands in a two-stroke-per-entry mode uses the various keys in a pattern reproducible on the keyboard surface to catalog a great number of computer commands, comprising self sufficient instructions for immediate selection of desired computer functions or data input entries, without reference to a catalog or address log external to the computer. The back panel of the generally hand-sized computer casing may be used for further instructions with less frequently encountered commands and operation modes, if desired.

In a fully comprehensive communication system embodiment, the computer incorporates a movable tape recorder for audio or digital data storage. Computer programs or data removed from computer memory may be stored en-masse in this recorder medium. An oral dictation mode of operation is thus also programmable, together with graphical representation, word processing and communication modes of operation, etc.

### Brief Description of the Drawings

Throughout the various views of the accompanying drawings similar reference characters identify similar features for ready comparison. The invention is set out in its preferred embodiment form, as follows:
Figures 1 and 2 show respectively in front and side panel view a pocket sized computer embodiment having twelve keys and an oversized display area capable of graphic illustration,
Figure 3 is a sixteen key version of the computer shown with alphanumeric word processing data on the oversized display screen,
Figure 4 is a back panel view showing additional keystroke instructions for functions not identified on the keys of the front panel, and an incorporated tape cassette used for digital communications with the computer and for oral dictation purposes,
Figure 5 is a block diagram sketch of the overall computer data flow through the usual computer sub-system portions, and
Figure 6 is a block functional control diagram of a computer constructed in accordance with the invention.

### The Preferred Embodiments

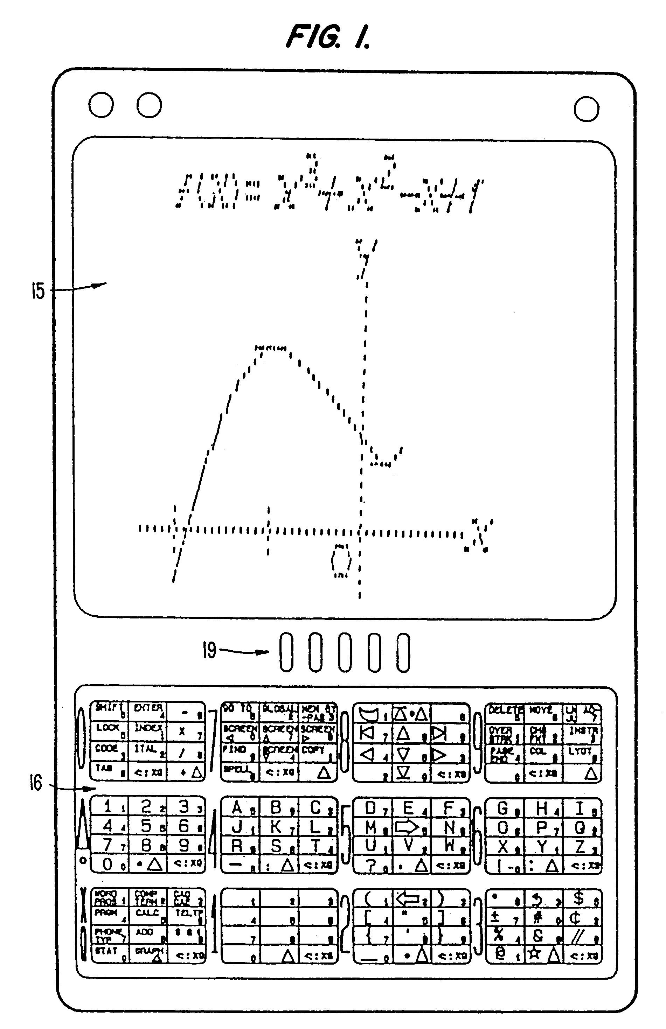

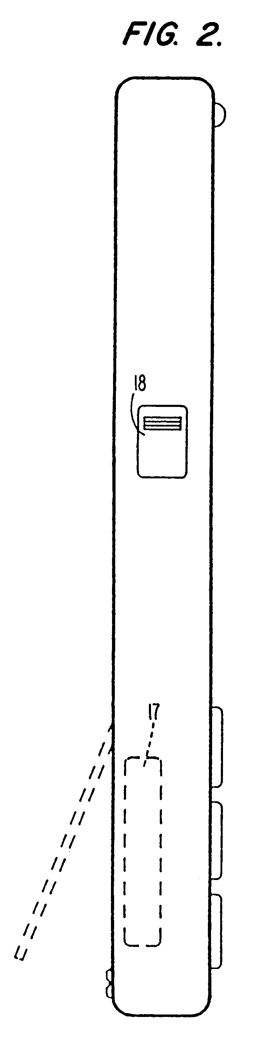

As may be seen by reference to Figures 1 and 2, a pocket sized computer is afforded by this invention wherein the display area space 15 is not limited significantly by an excessive number of manually operable keys, and thus constitutes more than half the shared front panel space partly taken up by the twelve keys of keyboard section 16.

The graphic display on the screen 15 includes not only space for an enlarged graph in great detail, but also has the corresponding alphanumeric notation displayed therealongside. This panel space could not have been available on a pocket sized portable computer with an alphanumeric keyboard of the typewriter character, which would either take up much more room than the twelve keys provided or would not provide enough room between entry positions for interference free finger tip location. Thus, these keys are large enough for comfortable and accurate manual entry to be manipulated by an operator's fingers in a touch type mode if desired.

It has been possible therefore to reduce keyboard panel space and enlarge display panel space by use of a twelve key keyboard having alpha capabilities. This is achieved by entering the alphabet characters, for example, by means of two keystrokes per character. As indicated in US-A-4,547,860, this technique will provide for 144 choices from twelve keys so that there will be room for up to about one hundred computer commands to be selected from the set of twelve keys as well as any entries usually made from a typewriter type keyboard. Thus, the reduction of numbers of keys in no way limits the capabilities of the keyboard to operate the computer fully.

It may be seen from the keyboard that the twelve keys are designated by notation to the left of the keys indicating the ten numeric digits (0 to 9), an execute key (XQ) and a decimal point key. The latter key serves a dual function as an "enter" key signified by the arrowhead so that when the second decimal point occurs in any entry, such as a multidigit decimal word, or such as in two successive decimal point strokes, an entry of the preceding information occurs. See U.S. -A-4,567,567 in this respect. The computer operates in the conventional manner of serially entering digits or characters until an enter command occurs.

Also it may be observed that on each key is a chart listing a set of twelve functions initiated by that key and identifying the second keystroke in the sequence to complete the designated entry. Thus to enter A for example, keys 4-5 are stroked in sequence as indicated in the upper left hand corner of the "4" key. Similarly the decimal digit "1" is entered by the two stroke sequence of the decimal point key and the "1" key. It is also possible to program the keys for other functions than displayed. For example if only numeric calculations are desired, then a "decimal" mode could be chosen wherein the twelve keys can be made "live" for single stroke entry of the decimal digits to save key entry time.

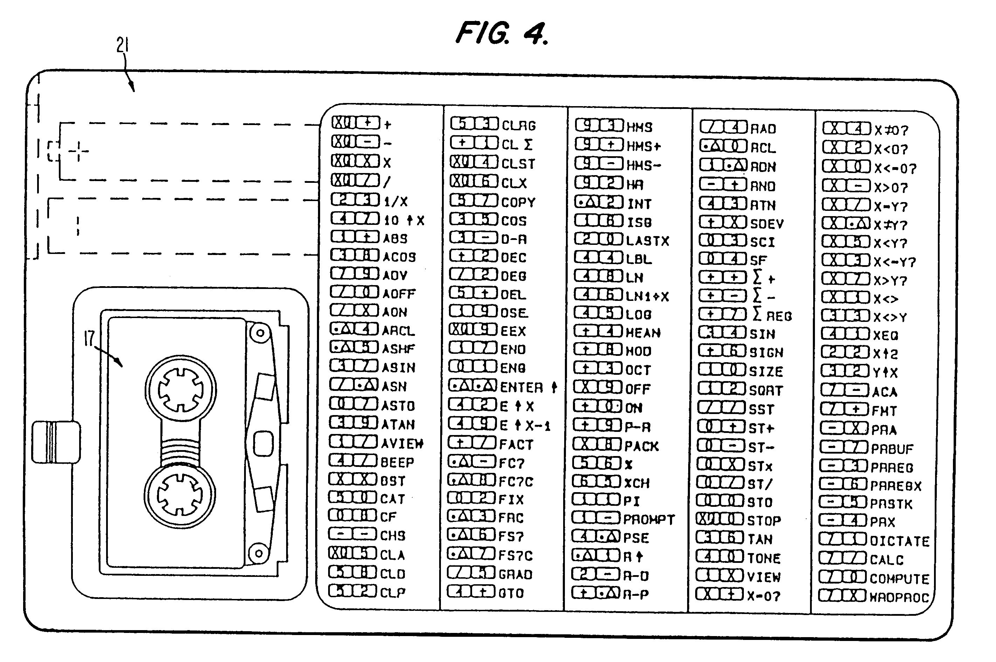

Other such modes may be chosen such as a "dictate" mode to be discussed hereinafter wherein the keyboard keys are adapted to the control and use of the internal movable tape cassette 17, using thumb switch 18, and microphone-replay speaker 19 for the functions normally expected for dictating purposes by means of key stroke control entries. These entries may of course be a portion of the 144 available functions if they are not allocated for other purposes. The functions available are shown in abbreviated formated such as "word proc" for the word processing mode obtained from the XQ-1 keystroke sequence. Other functions or selections or modes may be shown in the additional chart area on the back panel as shown in Figure 4 wherein the two keystrokes and command, mode selection, character or other computer functions are identified. Also custom designed sub-program entries may be allocated to key "1" to fill the blanks.

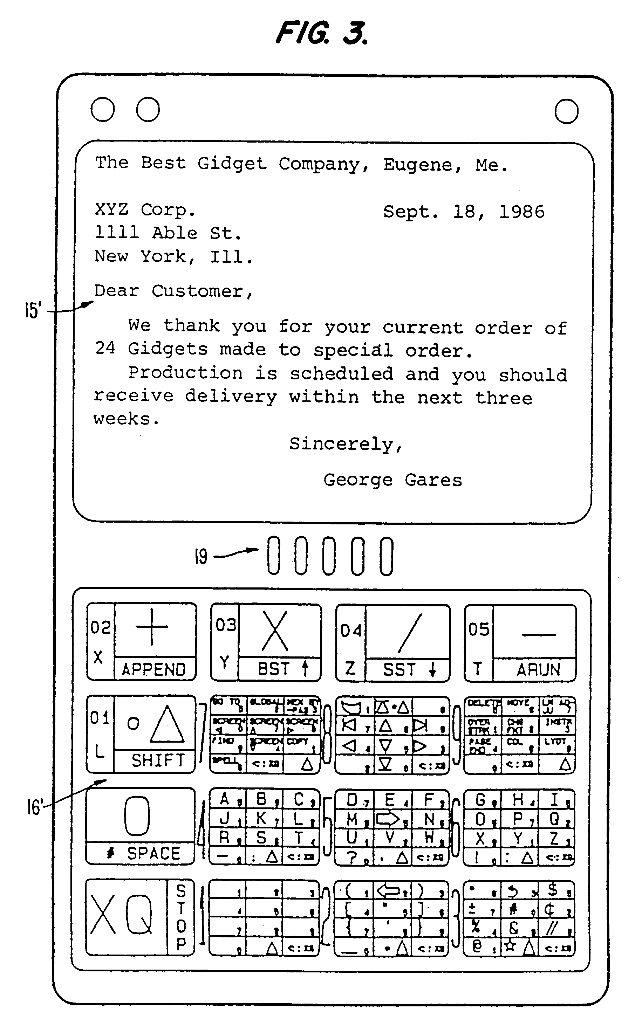

As may be seen from Figure 3, the enlarged screen area of display section 15' is sufficient to provide for multiple line alphanumeric displays. This is particularly useful for word processing and makes it feasible to incorporate word processing into a pocket sized programmable electronic computer. Such documents as displayed upon the screen 15' are created by the computer in response to manual information entered into the computer from the keyboard 16'.

The keyboard keys control the various functions related to word processing from stored program material in the computer in the manner described in the beforementioned patents, using the keyboard keys for the various controls as well as for data input. The movable tape recording means is also controlled by the computer and the keys to store the documents in digital form. Thus the tape recorder is used in different modes such as "dictation" and "word processing" to produce a versatile capability in personal computers, and can additionally serve as an oral communication medium for dictation and the like, where essentially the tape recorder is controlled by the keyboard rather than the computer.

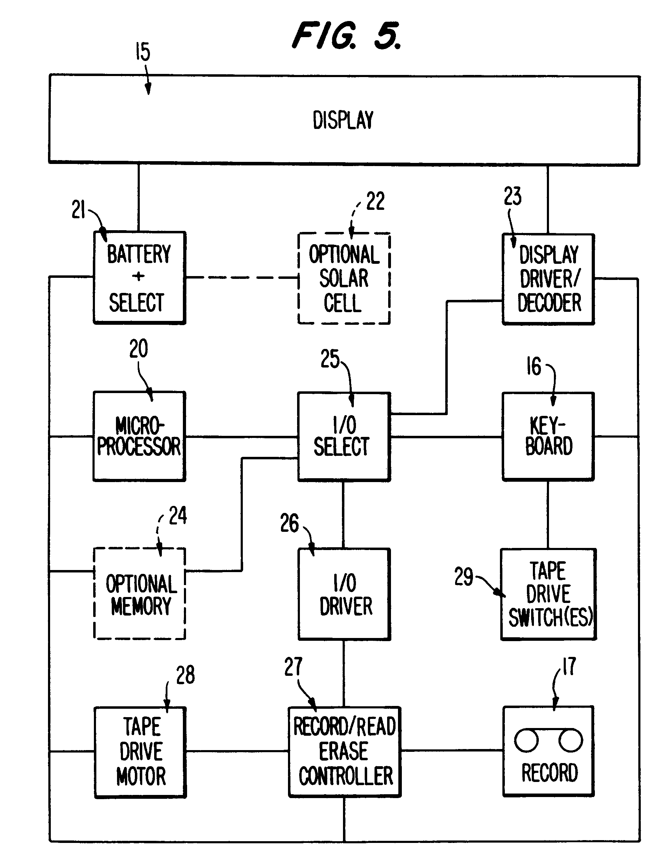

The operating system is shown in block diagram form in Figure 5 relating the keyboard 16, display screen 15 and movable tape recorder 17 to the computer microprocessor 20. This portable pocket sized system is powered by batteries 21 and/or the equivalent solar cells 22. The screen graphical or alphanumeric message is supplied by means of the driver-decoder 23, which works in conjunction with the computer 20 to organize and display information using whatever memory facilities are available and required in the computer 20 and the driver-decoder section 23. Optional further memory 24 may be incorporated, for example to receive and store information from the tape recorder 17 for word processing and/or display on the screen 15.

The input/output control section 25 coordinates the various sources and depositories of information and control commands whether they come from the keyboard 16 or computer 20. The interfacing driver 26 to the movable tape unit 17 permits the tape control section 27 to operate the tape drive motor 28 and the recording or reading functions of the tape recorder 17, such as interconnection of microphone, speaker and connections to memory or computer. Control of the tape through section 29 is coordinated with the keyboard 16, which also controls the associated word processing and computer command functions, so that in the "word processing" mode the system functions in a corresponding manner to state of the art word processors in personal computer sized console systems, for example.

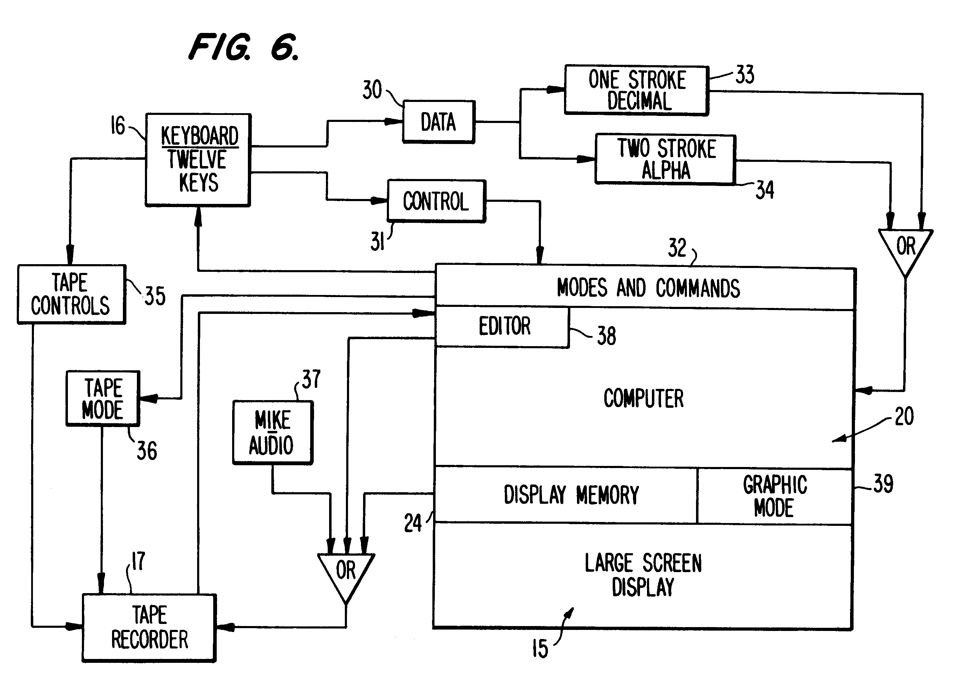

Figure 6 supplements the control functions just described with its data flow block diagram system relating to the keyboard 16, tape recorder 17 and computer 20. Data 30 and control commands 31 are both derived from the keyboard to supplement whatever data and commands are contained in the computer software, storage and command processing structure. Thus the keyboard entries may through the computer system modes and commands processing section 32 control the function of the keyboard 16 itself to reorient the keys for different modes of operation.

As aforesaid, two different modes might be a one stroke per entry decimal mode of operation (33), which initiates the entry and flow of data, and a two stroke per entry alpha and computer command mode (34) which initiates both the entry and flow of data and the flow of command signals to the computer system. A third mode as previously discussed might be the word processing or tape modes (36) wherein the keyboard controls all the normal functions of word processing including the tape drive control functions (35) hereinbefore described, either directly through the keyboard or as programmed by suitable computer software. In this respect the tape recorder is operable either from a microphone or other audio source (37), the computer editor section (38) or from computer storage such as for retaining word processing information available in a display screen 15 as may be contained explicitly in a disply memory section 24, which may include graphs formulated in the graphic mode of computer operation (39).

It is seen therefore that this invention provides a portable computer with a large screen capability which is made possible by interaction of various system features. In this interaction the ability to provide comprehensive control of alphanumeric information and a large number of computer commands from very few keyboard keys, such as twelve or sixteen, is critical to the provision of a large enough disply screen on a pocket sized programmable computer to process graphical displays and enough text presentation to make feasible word processing and other data handling features not heretofore found on pocket sized computers, including dictation and storage of considerable quantities of both digital and oral data that is processed.

Other features are made possible by this invention such as the storage of computer software programming in the movable tape storage medium for such purposes as word processing and special programs that are of interest to the user. The use of the computer in either an oral dictating mode or a word processing digital mode provides a system capability not heretofore available in portable pocket sized computer systems. Portable pocket sized computers heretofore have required too many keys to provide for alphanumeric operation and a full range of computer capabilities to be able either to afford large display screen areas or the comprehensive range of other computer capabilities made available by this invention.

## Claims

1. A programmable, portable, pocket-sized, electronic computer in a housing, which also is provided with an operating panel in the form of an alphanumeric keyboard (16) and a display panel (15) for alphanumeric presentation, the keyboard having a set of no more than sixteen keys, spaced apart for non-interfering manual actuation and coupled for entering data and computer commands, enabling the display panel to have a maximum size within a given total area on one side of the housing, having a word processing mode of keyboard and computer operation for creating documents in response to manual information entered by the keys into the computer,
**characterized** in that said display is a large display (15) constituting more than half the shared front panel space partly taken up by the keyboard (16) accommodating multiple lines of alphanumeric data processed by the keyboard in the word processing mode and computer programming means (31,32,38) for organizing the word processing information during formulation in a multi-line display on the display panel.

2. A computer according to claim 1,
**characterized** by a movable tape recording device (17), connected for operation and interchange of data with the computer.

3. A computer according to claim 2,
**characterized** by audio responsive means (19) and an audio recording mode of operation for storage of audio data by the tape recording device (17) in response to instructions from the keys.

## Patentansprüche

1. Programmierbarer, tragbarer elektronischer Rechner im Taschenformat in einem Gehäuse, das weiter mit einem Bedienungsfeld in der Form einer alphanumerischen Tastatur (16) und einem Displayfeld (15) zur alphanummerischen Darstellung versehen ist, wobei die Tastatur einen Satz von nicht mehr als 16 Tasten hat, die voneinander für eine nicht interferierende manuelle Betätigung beabstandet sind und zum Eingeben von Daten und Computerbefehlen gekoppelt sind, was es erlaubt, daß das Displayfeld eine maximale Größe innerhalb einer gegebenen Gesamtfläche auf einer Seite des Gehäuses hat, mit einem Textverarbeitungsbetrieb der Tastatur und des Computers zum Erzeugen von Schriftstücken in Antwort auf eine manuelle Information, die über die Tasten in den Rechner eingegeben wird,
dadurch gekennzeichnet, daß das Display ein großes Display (15) ist, das mehr als die Hälfte der gemeinsamen Vorderfeldfläche, die teilweise von der Tastatur (16) belegt wird, bildet, mit Platz für mehrere Zeilen von alphanumerischen Daten, die von der Tastatur in dem Textverarbeitungsbetrieb verarbeitet werden, und mit Computerverarbeitungsmitteln (31, 32, 38) zum Organisieren der Textverarbeitungsinformation während der Formulierung in einem Mehrzeilendisplay auf dem Displayfeld.

2. Ein Computer nach Anspruch 1,
gekennzeichnet durch ein bewegliches Bandaufzeichnungsgerät (17), das für den Betrieb und zum Austausch von Daten mit dem Computer verbunden ist.

3. Ein Computer nach Anspruch 2,
gekennzeichnet durch auf Audiosignale ansprechende Mittel (19) und einem Audiosignalaufzeichnungsbetrieb zum Speichern von Audiodaten durch das Bandaufzeichnungsgerät (17) in Antwort auf Instruktionen von den Tasten.

## Revendications

1. Ordinateur électronique de poche programmable et portable placé dans un boîtier, qui est également muni d'un panneau de commande se présentant sous la forme d'un clavier alphanumérique (16) et d'un panneau d'affichage (15) permettant une présentation alphanumérique, le clavier étant constitué d'un ensemble de seize touches au plus, suffisamment espacées pour être actionnées manuellement sans interférer et reliées pour entrer des données et des commandes d'ordinateur, ce qui permet au panneau d'affichage d'avoir une taille maximum à l'intérieur d'une surface totale sur une face du boîtier, présentant un mode de clavier de traitement de texte et un fonctionnement en ordinateur pour créer des documents en réponse à une information manuelle entrée par les touches dans l'ordinateur,
caractérisé en ce que l'affichage est un grand affichage (15) dépassant plus de la moitié de l'espace frontal du panneau pris en partie par le clavier permettant la présentation de lignes multiples de données alphanumériques traitées par le clavier dans le mode traitement de texte, et par les moyens de programmation (31,32,38) qui organisent l'information de traitement de texte durant sa formulation en un affichage multi-lignes sur le panneau d'affichage.

2. Ordinateur selon la revendication 1, caractérisé par un dispositif amovible d'enregistrement à bande (17), connecté de façon à fonctionner et échanger des données avec l'ordinateur.

3. Ordinateur selon la revendication 2, caractérisé par des moyens de réponse audio (19) et un mode d'enregistrement de fonctionnement audio permettant de stocker des données audio sur le dispositif d'enregistrement à bande (17), en réponse aux instructions des touches.
